# EUROPEAN PATENT APPLICATION

(11) **EP 1 995 853 A1**
(43) Date of publication of application: **26.11.2008**
(21) Application number: 07301063.9
(22) Date of filing: 24.05.2007
(51) Int. Cl.: H02K 5/15, H02K 5/16, H02K 11/00

(54) **Electric Motor**

(71) Applicant: Alcatel Lucent, 75008 Paris (FR)
(72) Inventor: Pfendler, Klaus, 79848, Bonndorf (DE); Moser, Dieter, 79848, Bonndorf (DE); Pfeifer, Christof, 79848, Bonndorf (DE)
(74) Representative: Brose, Gerhard

(57) **Abstract**

The invention relates to an electric motor with a housing (HP1, HP2), a rotor (MR), a stator (St), an axle (Ax), and two bearings (BB) that are arranged at the same side of the rotor (MR).

## Description

The invention relates to an electric motor according to the preamble of claim 1.

Such electric motors are very well known in the art. The housing is normally of cylindrical shape and has two bearing shields at the ends. Often the bearing shields contain ball bearings as bearings. Nowadays electric motors, especially brushless electric motors, contain electronics elements including power electronics. They also include position sensors like a hall sensor cooperating with a sensor magnet fixed to the rotating part.

Such motors are not easy to assemble: The axle hinders the electronic board. The bearing shields have to be screwed-on, as they are part of the mounting possibilities for assembling the motor to its load. The electronics is no longer accessible for service.

It is the object of the invention to provide a motor that is easier to assemble.

This object is achieved by an electric motor according to the teachings of claim 1.

The idea is to arrange both bearings at the same side of the rotating part.

Such arrangement has further advantages or offers the possibility to foresee further advantageous elements:
- Mounting possibilities can be foreseen in a plane between the bearings and the rotor, which leads to an operation with less vibration.
- The main part of the housing can be made as an inexpensive diecast part.
- A simple cover that has no mechanical function will close the motor. It could even be a snapped in part of plastics.
- When electronics elements are foreseen, there is more room and more freedom for their mechanical design, especially for printed circuit boards.
- Power electronic parts, that is power semiconductors, may be easily brought into close thermal contact with the housing, which then, of course, should be thermally conducting.
- Bags for the power semiconductors can easily be provided in the housing.
- Also the part of the housing that carries the bearings contributes to the heat transfer.
- The free end of the axle offers an easy way to affix a magnet for sensing the position.

Further embodiments of the invention are to be found in the subclaims and in the description.

In the following the invention will be described with the aid of the accompanying drawing:

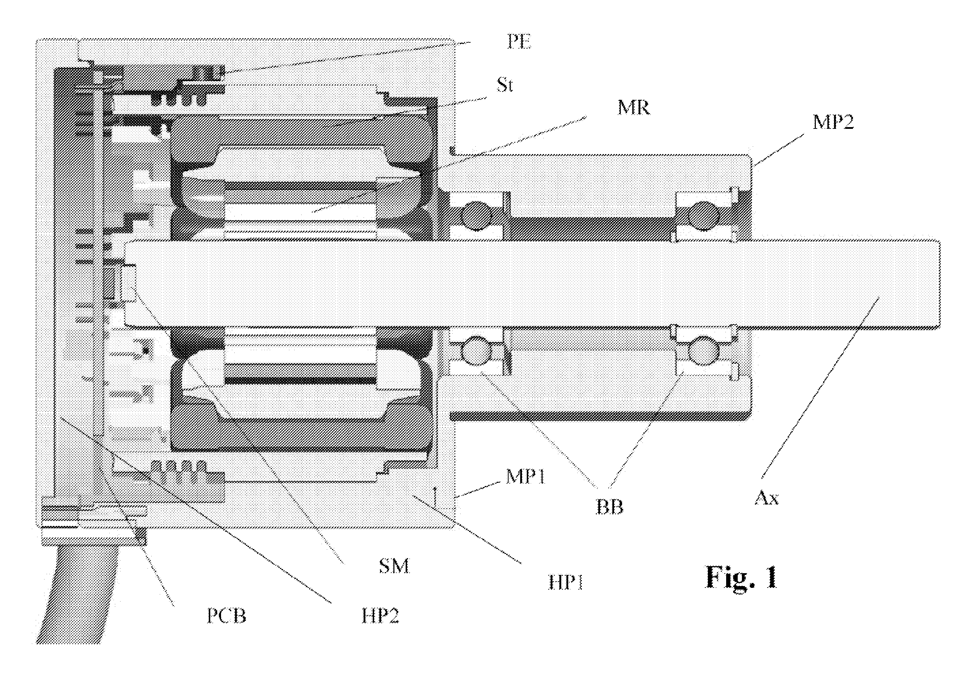

- Figure 1: shows a longitudinal section through an electric motor according to the invention.

Based on figure 1 first the parts of any electric motor are described: We see a housing, HP1 and HP2, a rotor MR, a stator St, an axle Ax, and two bearings BB, here shown as ball bearings.

In addition we see, not necessarily part of or restricted to the invention, power electronic elements PE, a printed circuit board PCB, and a sensor magnet SM.

The rotor MR is built essentially out of permanent magnets, as usual.

The stator St as usual consists of a number of coils wound on a body made out of a stack of stator sheets.

In non-brushless electric motors the roles of stator and rotor with respect to permanent magnets and coils is inverted.

The axle Ax is carrying the rotor and is carried by the two bearings BB. The axle Ax is leaving the housing for driving a load, here seen at the right hand side.

Different from what is usual, according to the invention the two bearings BB now both are on the same side of the rotor MR. In the shown example, where the bearings are ball bearings, they have to have a certain distance from one another to be able to correctly bear the axle with the rotor. In case of roller bearings may be no such distance is necessary; in principle than the rollers could be such broad to serve as two bearings.

It is obvious that such arrangement anyway offers enough support to the axle and the rotor as the usual both-sided arrangement.

The assembly of such type of motor is easily to achieve. There is no need to separately affix two bearing shields. At the side where the two bearings are, the end plate can be part of, and in this example is part of a housing part HP1, that also includes the cylindrical part for housing rotor MR and stator St. At the other side there is a mere cover as housing part HP2, that does not have any mechanical function and thus does not need to be carefully screwed.

Then the axle Ax with the pre-assembled rotor MR can be inserted.

Next the stator St pre-assembled with the commutating electric parts and the electrical connection may be imposed on the rotor MR. Here only care must be taken that power electronic parts get a close contact to the housing for cooling reasons.

Finally the housing is being closed by the second housing part HP2, a mere cover.

What cannot be seen in the figure is the mounting possibilities at the bearing-sided end. Normally for such task one has, and can have also here, a number of holes with internal screw threads. The fact that the bearings only need a housing part with less diameter compared to the housing part of the proper motor parts has an additional advantage: Mounting possibilities MP2 can be foreseen at the front side of the part carrying the bearings (bearing region) or, MP1, at the front side of the proper motor housing part, or both. When mounting the motor between the proper motor and the bearings using mounting possibilities MP1, we have the already mentioned situation with less vibration, because then the mounting is as near to the center of gravity as possible.

The commutating electric parts in the case of brushless motors essentially consist of at least one sensor for sensing the actual angular position, and electronic parts, including power electronic elements PE, to activate the respective coils of the stator. As sensor in such situation normally at least one Hall sensor is used in cooperation with at least one sensor magnet SM affixed to the rotor. In this case such magnet can be affixed at the front of the axle.

As usual in such situation, the electronic parts and mostly also the sensor or sensors are assembled on a printed circuit board PCB, as also shown in the exemplary figure. The invention presents enough room and enough design freedom for adding more electronics on this printed circuit board PCB or even further planes of printed circuit boards for carrying more electronics. An actual trend to include further electronics into motors benefits therefrom. As the second housing part HP2 does not have mechanical functions it can even be opened during operation of the motor to give access to the electronics for monitoring.

If it is not necessary for shielding reasons, the cover HP2 can be made out of plastics, maybe with a snap fit part for mounting on the first housing part HP1.

The main housing part, housing part HP1, can be a simple and cheep cast part. If it is thermally sufficient, it could be made out of plastics. Mostly the power electronics PE needs to be cooled what can best be done in using a thermally conducting housing, especially a metallic diecast one. There the power electronics, that is the power semiconductors, on the printed circuit board can be brought into close contact with the inner side of the housing for cooling reasons. Special bags may be foreseen in the housing for this task.

Of course, the first housing part HP1 could be made in two parts, a first one being cylindrical, as usual, and a second one being a separate bearing shield with an unconventional shape, here including both bearings.

## Claims

1. Electric motor with a housing (HP1, HP2), a rotor (MR), a stator (St), an axle (Ax), and two bearings (BB), **characterized in, that** both bearings (BB) are arranged at the same side of the rotor (MR).

2. Motor according to claim 1, **characterized in, that** at the bearing-sided end mounting possibilities (MP1, MP2) is foreseen.

3. Motor according to claim 1, **characterized in, that** the housing is built in two parts, such that one part (HP1) contains the proper motor and the bearing region and a second part (HP2) is designed as a cover at the side far from the bearings.

4. Motor according to claim 1, **characterized in, that** at the side far from the bearings an electronic board (PCB) is placed.

5. Motor according to claim 4, **characterized in, that** the housing (HP1) is thermally conducting and power semiconductors placed on the electronic board (PCB) are in contact with the inner side of the housing for cooling reasons.

6. Motor according to claim 2, **characterized in, that** the housing part housing the bearings has less diameter than the housing part housing the proper motor, and that mounting possibilities (MP1) are foreseen at the front of the housing part housing the proper motor facing housing part housing the bearings.

## Amended claims

### Amended claims in accordance with Rule 137(2) EPC.

**1.** Electric motor with a housing (HP1, HP2), a rotor (MR), a stator (St), an axle (Ax), and a bearing region with two bearings (BB), where both bearings (BB) are arranged at the same side of the rotor (MR) in axial direction, **characterized in, that** the housing is built in two parts, such that one part (HP1) contains rotor (MR) and stator (St) and the bearing region and a second part (HP2) is designed as a cover at the side far from the bearing region.

**2.** Motor according to claim 1, **characterized in, that** at the bearing-sided end mounting possibilities (MP1, MP2) is foreseen.

**3.** Motor according to claim 1, **characterized in, that** at the side far from the bearings an electronic board (PCB) is placed.

**4.** Motor according to claim 3, **characterized in, that** the housing (HF1) is thermally conducting and power semiconductors placed on the electronic board (PCB) are in contact with the inner side of the housing for cooling reasons.

**5.** Motor according to claim 2, **characterized in, that** the housing part housing the bearings has less diameter than the housing part housing the proper motor, and that mounting possibilities (MP1) are foreseen at the front of the housing part housing the proper motor facing housing part housing the bearings.
